# EUROPEAN PATENT SPECIFICATION

(11) **EP 2 231 423 B1**
(45) Date of publication and mention of the grant of the patent: **17.04.2013**
(21) Application number: 07856730.2
(22) Date of filing: 14.12.2007
(51) Int. Cl.: B60C 9/20, B60C 9/22

(54) **HEAVY LOAD VEHICLE TIRE HAVING AN IMPROVED BELT STRUCTURE**
NUTZFAHRZEUG-REIFEN MIT VERBESSERTER GÜRTELSTRUKTUR
PNEU POUR VÉHICULE POIDS LOURD AYANT UNE STRUCTURE DE CEINTURE AMÉLIORÉE

(43) Date of publication of application: 29.09.2010
(73) Proprietor: Pirelli Tyre S.P.A., 20126 Milan (IT)
(72) Inventor: MINOLI, Claudio, I-20126 Milano (IT); MONTANARO, Fabio, Mario, I-20126 Milano (IT)
(74) Representative: Lasca, Sergio
(86) International application number: PCT/EP2007/010989
(87) International publication number: WO 2009/076970

(56) References cited:
- WO-A-01/45966
- FR-A- 2 887 813
- US-B1- 6 401 778

## Description

### Field of the invention

The present invention relates to a heavy load vehicle tire.

More in particular, the present invention relates to a heavy load vehicle tire comprising an improved belt structure.

As it is known, a tire usually comprises a carcass structure of a substantially toroidal shape, having opposite lateral edges associated with respective right-hand and left-hand bead structures; a belt structure applied in a radially outer position with respect to said carcass structure; a tread band applied in a radially outer position with respect to said belt structure; a pair of sidewalls applied laterally on opposite sides with respect to said carcass structure.

Said belt structure, in particular in case of heavy load vehicle tires, usually comprises three or more belt layers each including reinforcing elements wich are parallel to each other and inclined with respect to the equatorial plane of the tire. In a conventional arrangement, the reinforcing elements of the radially innermost belt layer are inclined at a relatively large angle with respect to the equatorial plane of the tire, while the reinforcing elements of the other two radially adjacent belt layers are inclined at relatively small angles with respect to the tire equatorial plane and in opposite directions to each other. The radially innermost belt layer forms with the other two radially adjacent belt layers a triangulated reinforcement which has little deformation under the different stresses to which it is subjected, the essential role of said radially innermost belt layer being to take up the transverse compressive forces to which all the reinforcements in the zone of the belt structure of the tire are usually subjected.

It is well known that the belt structure may exert a very important influence both on the performances of the tire (for example, in terms of prompt response to steering and of direction steadiness) and on the service life thereof, in particular on the wear speed and evenness of the tread band. For example, an uneven wear of the tread band adversely affects the drive behaviour of the tire giving rise to vibrations and continuous deviations of the vehicle from its trajectory.

Attempts to solve the problems above reported have been already made in the art.

For example, United States Patent US 5,591,284 relates to a heavy duty radial tire includes a ground contacting tread region reinforced by a breaker strip assembly comprising at least three breaker plies of fabric of parallel metallic cords such as steel cords, in which the cords of the radially innermost first ply and the cords of the third ply are inclined at a relatively small angle with respect to the equatorial plane of the tire, wherein the cords of the second ply, disposed radially between the first and third plies, are the only cords inclined at an inclination angle with respect to the equatorial plane of the tire in the range of 40° to 85°, and wherein the cords of the first and third plies are inclined in opposite directions to each other and have inclination angles with respect to the equatorial plane of the tire in the range of 5° to 40°. Preferably, the inclination angle of the cords of the second ply is in the range of 65° to 75° and the inclination angles of the cords of the first and third plies are in the range of 15° to 25°. Most preferably, the cords of the second ply, are at 67° and those of the first and third plies are at 18°. The abovementioned tire is said to have an improved breaker strip assembly and, consequently, an improved service life.

United States Patent US 5,738,740 relates to a tire, in particular a heavy load vehicle tire, having a carcass reinforcement and a crown reinforcement comprising at least two working crown plies of inextensible cables, crossed from one ply to the next, forming angles of between 10° and 45° with the circumferential direction, said plies having widths at least equal to 80% of the maximum axial width So of the carcass reinforcement, said tire being characterised in that firstly an axially continuous ply formed of inextensible metal cables forming with the circumferential direction an angle of at least 60° and the axial width of which is at least equal to the axial width of the shortest working crown ply is arranged between the carcass reinforcement and the working ply radially closest to the axis of rotation, and secondly an additional ply formed of metallic elements oriented substantially parallel to the circumferential direction, the axial width of said ply being at least equal to 0.7 So, and its elasticity modulus upon traction being at most equal to that of the most extensible working ply, is arranged between the two working crown plies. The abovementioned tire is said to have an improved endurance of the crown reinforcement and, consequently, an improved service life.

United States Patent US 5,772,810 relates to a tire comprising a radial carcass reinforcement surmonted by a crown reinforcement formed, in direction radially from the inside to the outside, of at least one triangulation ply of non-stretchable metal wires or cables which form an angle of between 60° and 90° with the circumferential direction and of two working plies formed of non-stretchable metal wire or cables crossed from one ply to the next and forming an angle of between 10° and 45° with the circumferential direction, characterized by the fact that the first working ply, which is radially adjacent on the outside of the radially outermost triangulation ply, has a width less than the width of said triangulation ply, the second working ply, which is radially above the first working ply, has an axial width greater than the width of the triangulation ply, and the edges of said second working ply cover the edges of said triangulation ply so that the radial distances between the respective wires or cables of the two plies at the level of said edges are at most equal to 1.5 mm over an axial distance at least equal to 2% of the axial width of the triangulation ply. A variant of said tire is disclosed which further comprises an additional ply including metal elements oriented in a substantially circumferential direction, said additional ply having an axial width of less than the width of the first working ply and located radially between the two working plies. The abovementioned tire is said to be particularly useful for heavy vehicles and to have an improved crown reinforcement and, consequently, an improved service life.

United States Patent US 6,470,939 relates to a tire with a radial carcass reinforcement of maximum axial width S₀, comprising a crown reinforcement formed of at least two working crown plies of inextensible reinforcement elements, crossed from one ply to the other, forming angle s of between 10° and 45° with the circumferential direction, said plies having axial widths at least equal to 80% of the width So, and greater by at least 16% of the width So than the width of an additional ply of reinforcement elements, arranged radially between said working plies, said working plies, on either side of the equatorial plane and in the immediate axial extension of the additional ply, being coupled over an axial distance at least equal to 3.5% of the width So, then being decoupled by profiled members of rubber mix at least over the remainder of the width common to said two working plies, said tire being characterized in that the reinforcement elements of the additional ply are metallic, inextensible and substantially radial. The abovementioned tire is said to be particularly useful for heavy vehicles and to have an improved crown reinforcement and, consequently, an improved service life. Document FR 2 887 813, corresponding with the preamble of claim 1, shows a tire having a radial carcass reinforcement comprising a crown reinforcement formed of at least two working crown layers of inextensible reinforcement elements, which are crossed from one ply to the other, forming angles of between 10° and 45° with the circumferential direction, which itself is topped radially by a tread, said tread being joined to two beads by means of two sidewalls and the axially widest working crown layer being radially internal to the other working crown layers. The tire comprises in each shoulder at least one layer of reinforcement elements which are parallel to each other in the layer and are oriented radially relative to the reinforcement elements of the working layer radially adjacent to said additional layer, the axially inner end of said additional layer being radially adjacent to said additional layer, the axially inner end of said additional layer being radially adjacent to the edge of the radially outer working crown layer, and at least part of said additional layer being radially and/or axially adjacent to the edge of the axially widest working crown layer. Document WO 01/45966 shows a pneumatic tire having a reinforcement package including a mid-ply belt having reinforcement at a 0° angle with respect to the equatorial plane of the tire. The mid-ply belt comprises reinforcing cords or filaments that are discontinuous. The discontinuous cords or filaments are made from polyethylene napthalate.

### Summary of the invention

The Applicant has noticed that sometimes, during use of the tire, because of the stresses occuring between the belt structure and the carcass and, more particularly, between the belt structure layers, some premature and dangerous separations of the belt structure layers from each other and from the carcass may occur, which result in the tire becoming out of use.

Moreover, the Applicant has noticed that, in particular at the shoulder regions of the tire which are usually subjected to continuous microsliding on the asphalt, a premature wear may occur, which results in an uneven wear of the tread band.

Furthermore, the Applicant has noticed that, in particular in the case of tires used in the drive position, an irregular wear may also occur in each block, in particular between the centre and the edges of the blocks which are made on the rolling surface of the tread band.

Moreover, the Applicant has noticed that, as a result, the tire performances (such as, for example, drive behaviour, steering stability, straight running, lateral stability, handling, ride comfort) may be negatively affected.

The Applicant has faced the problem of providing a tire, particularly a heavy load vehicle tire, having both an improved structural integrity of the belt structure and an improved wear evenness of the tread band, as well as improved tire performances.

The Applicant has now found that it is possible to obtain a tire having the above reported properties by applying both a first belt layer being provided with a plurality of reinforcing elements parallel to one another and inclined with respect to the equatorial plane of said tire at an angle not higher than 60°, said first belt layer being placed in a radially outer position with respect to the carcass structure, and at least one reinforcing layer including a plurality of reinforcing elements oriented in a substantially circumferential direction, said reinforcing layer being placed between at least two crossed belt layers.

The so obtained tire shows an improved structural integrity of the belt structure and an improved wear evenness of the tread band, as well as improved tire performances (in particular, improved straight running and lateral stability). Furthermore, said tire shows both improved footprint shape and footprint pressure distribution. Moreover, said tire is endowed with an improved load bearing capacity during use. Furthermore, said tire shows a good balance between handling and durability. Moreover, said tire may be retreaded more than once so as to allow a decrease on the maintenance costs of the truck fleets.

According to a first aspect, the present invention relates to a tire comprising:
- a carcass structure comprising at least one carcass ply, of a substantially toroidal shape, having opposite lateral edges associated with respective right-hand and left-hand bead structures;
- a belt structure applied in a radially outer position with respect to said carcass structure;
- a tread band applied in a radially outer position with respect to said belt structure;
- two sidewalls, each sidewall being applied laterally on opposite sides with respect to said carcass structure;
   said belt structure comprising:
- a first belt layer applied in a radially outer position with respect to said carcass structure, said first belt layer being provided with a plurality of reinforcing elements parallel to one another and inclined with respect to the equatorial plane of said tire at an angle lower than 60°;
- a second belt layer applied in a radially outer position with respect to said first belt layer, said second belt layer being provided with a plurality of reinforcing elements parallel to one another and inclined with respect to the equatorial plane of said tire;
- at least one reinforcing layer, said reinforcing layer being provided with a plurality of reinforcing elements oriented in a substantially circumferential direction, said reinforcing layer being placed in a radially outer position with respect to said second belt layer;
- a third belt layer applied in a radially outer position with respect to said at least one reinforcing layer, said third belt layer being provided with a plurality of reinforcing elements parallel to one another and inclined with respect to the equatorial plane of said tire in a direction opposite to those of said second belt layer.

For the aim of the present description and of the claims which follows, the angle values have to be understood in absolute value, namely without regard to their sign.

According to one preferred embodiment, said tire is a heavy load vehicle tire.

For the aim of the present description and of the claims which follow, the expression "heavy load vehicle tire" means vehicle of categories M2∼M3, N2∼N3 and 02-04, according to ECE Consolidated Resolution of the Construction of Vehicles (R.E.3), Annex 7, "Classification and definition of power-driven vehicles and trailers", such as, for example, truck, tractor-trailers, lorries, buses, large vans, and other similar vehicles.

The present invention, in the abovementioned aspect, may show one or more of the preferred characteristics hereinafter described.

According to one preferred embodiment, said first belt layer is provided with a plurality of reinforcing elements parallel to one another and inclined with respect to the equatorial plane of said tire at an angle not lower than or equal to about 30°, preferably of from about 45° to about 55°. Preferably, said reinforcing element are inclined in the same direction of those of said second belt layer.

The Applicant has found that inclination angles lower than 30° may negatively affect the behaviour of said first belt layer. In particular, the Applicant has found that inclination angles lower than 30°, may cause a stiffening of said first belt layer with a consequent negative impact on the tire performances, in particular handling and ride comfort.

According to one preferred embodiment, said first belt layer is placed directly in contact with said carcass structure.

According to a further preferred embodiment, at least one belt underlayer may be placed between said first belt structure and said carcass structure.

According to one preferred embodiment, said second belt layer is placed directly in contact with said first belt layer.

According to a further preferred embodiment, said second belt layer has its axially outer edges staggered axially outward with respect to the corresponding axially outer edges of said first belt layer. This allows to obtain an improved structural integrity of the belt structure.

According to a further preferred embodiment, said second belt layer has its axially outer edges in correspondence of the axially outer edges of said first belt layer.

According to a further preferred embodiment, said second belt layer is provided with a plurality of reinforcing elements parallel to one another and inclined with respect to the equatorial plane of said tire at an angle of from about 10° to about 40°, preferably of from about 15° to about 30°.

According to one preferred embodiment, said at least one reinforcing layer comprises at least one pair of lateral reinforcing strips, said pair of lateral reinforcing strips being substantially simmetrically arranged with respect to the equatorial plane of the tire and applied in correspondence of the axially outer portions of the tire belt structure.

According to one preferred embodiment, each of said pair of lateral reinforcing strips has an axial width lower than or equal to about 45%, more preferably of from about 5% to about 40%, still more preferably of from about 10% to about 35%, with respect to the axial width of the belt structure, said axial width corresponding to the axial width of the wider belt layer. This allows to improve the evenness wear of the tread band, as well as to improve the load bearing capacity of the tire during use.

According to a further preferred embodiment, said at least one reinforcing layer extends substantially along the whole axial development of said belt structure.

According to a further preferred embodiment, said at least one reinforcing layer is placed directly in contact with said second belt layer.

According to a further preferred embodiment, said at least one reinforcing layer has its axially outer edges staggered axially inward with respect to the corresponding axially outer edges of said second belt layer.

According to one preferred embodiment, said third belt layer is placed directly in contact with said at least one reinforcing layer.

According to a further preferred embodiment, said third belt layer has its axially outer edges staggered axially inward with respect to the corresponding axially outer edges of said second belt layer. This allows to obtain an improved structural integrity of the belt structure.

According to a further preferred embodiment, said third belt layer is provided with a plurality of reinforcing elements parallel to one another and inclined with respect to the equatorial plane of said tire at an angle of from about 10° to about 40°, preferably of from about 15° to about 25°. Preferably, said reinforcing elements are inclined in an opposite direction with respect to those of said second belt layer.

According to one preferred embodiment, said belt structure further comprises an outer belt layer applied in a radially outer position with respect to said second and said third belt layers, said outer belt layer being provided with reinforcing elements parallel to one another.

According to one preferred embodiment, said outer belt layer has its axially outer edges staggered axially inward with respect to the corresponding axially outer edges of said third belt layer.

According to a further preferred embodiment, said outer belt layer has its axially outer edges staggered axially inward with respect to the corresponding axially outer edges of said at least one reinforcing layer.

According to a further preferred embodiment, said outer belt layer has its axially outer edges in correspondence of the axially outer edges of said at least one reinforcing layer.

According to a further preferred embodiment, the reinforcing elements of said outer belt layer are inclined with respect to the equatorial plane of said tire. Preferably, said reinforcing elements are inclined with respect to the equatorial plane of said tire at an angle of from about 10° to about 40°, preferably of from about 15° to about 25°. Preferably, said reinforcing elements are inclined in the same direction of those of said third belt layer.

Said outer belt layer may act as a protection layer from stones or gravel possibly entrapped into the tread grooves and which may cause damages to the belt structure and even to the carcass structure.

According to one preferred embodiment, said belt structure further comprises an additional belt layer (hereinafter referred also to as a "fourth belt layer"), applied between said third belt layer and said outer belt layer, said fourth belt layer being provided with a plurality of reinforcing elements arranged parallel to one another and inclined with respect to the equatorial plane of said tire. Preferably, said reinforcing elements are inclined with respect to the equatorial plane of said tire at an angle of from about 10° to about 40°, preferably of from about 15° to about 25°. Preferably, said reinforcing elements are inclined in the same direction of those of said third belt layer. Said fourth belt layer allows to obtain an improved structural integrity of the belt structure.

According to a further preferred embodiment, said fourth belt layer is placed directly in contact with said third belt layer.

According to a further preferred embodiment, said fourth belt layer has its axially outer edges staggered axially inward with respect to the corresponding axially outer edges of said third belt layer.

According to a further preferred embodiment, said fourth belt layer has its axially outer edges in correspondence of the axially outer edges of said third belt layer.

### Brief description of the drawings

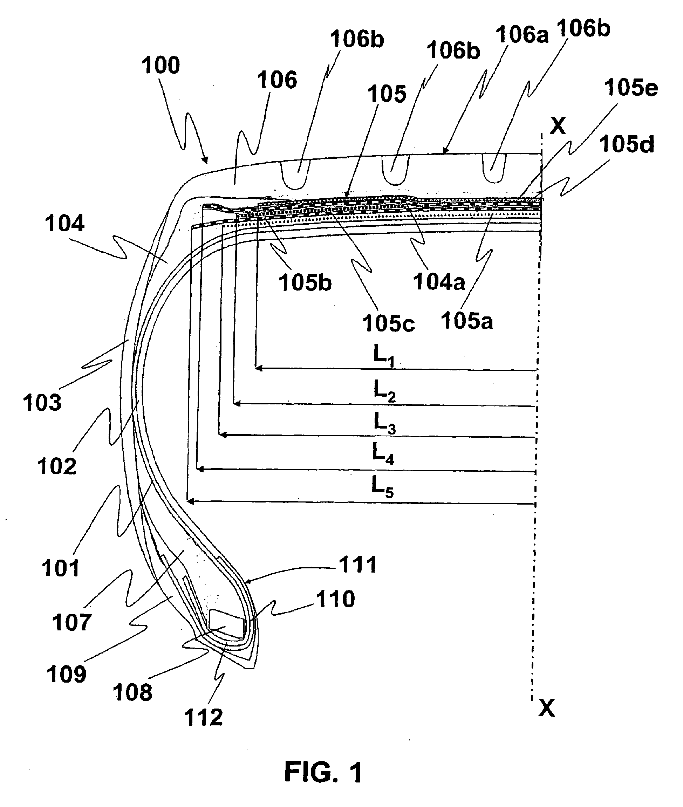

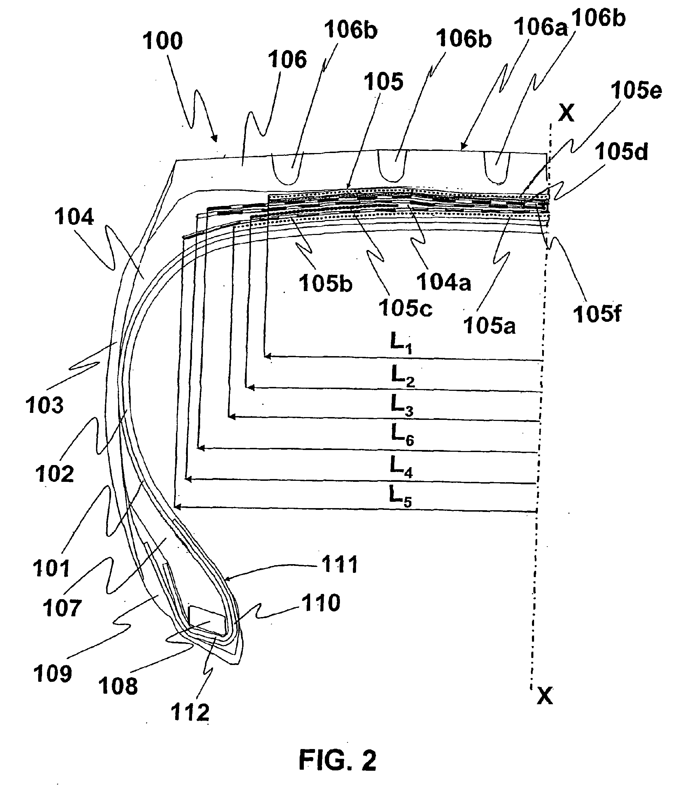

Additional features and advantages of the invention will be better apparent from the following description of some preferred embodiments of a tire according to the present invention, which description is made, by way of non-limiting example, with reference to the attached Fig. 1 and Fig. 2, wherein:
- Fig. 1 is a view in cross-section of a portion of a tire according to the present invention;
- Fig. 2 is a view in cross-section of a portion of a further embodiment of a tire according to the present invention.

### Detailed description of the preferred embodiments

For simplicity, Fig. 1 shows only a portion of the tire, the remaining portion not represented being identical and simmetrically arranged with respect to the equatorial plane (X-X) of the tire.

The tire (100) comprises at least one carcass ply (101), the opposite lateral edges of which are associated with respective bead structures (111) comprising at least one bead core (108) and at least one bead filler (107). The association between the carcass ply (101) and the bead core (108) is achieved here by turning back the opposite lateral edges of said at least one carcass ply (101) around the bead core (108) so as to form the so-called carcass turn-up (112) as represented in Fig. 1.

Alternatively, the conventional bead core (108) may be replaced with at least one annular insert formed from rubberized wires arranged in concentric coils (not represented in Fig. 1) (see, for example, European Patent Applications EP 928,680 or EP 928,702). In this case, the carcass ply (101) is not turned-back around said annular inserts, the coupling being provided by a second carcass ply (not represented in Fig. 1) applied externally over the first.

The carcass ply (101) generally comprises a plurality of reinforcing elements arranged parallel to each other and at least partially coated with a layer of a crosslinked elastomeric material. These reinforcing elements, in particular in case of heavy load vehicle tires, are usually made of steel wires stranded together, coated with a metal alloy (for example copper/zinc, zinc/manganese, zinc/molybdenum/cobalt alloys and the like). Textile fibres such as, for example, rayon, nylon or polyethylene terephthalate, may be used for different type of tyres.

The carcass ply (101) is usually of radial type, i.e. it incorporates reinforcing elements arranged in a substantially perpendicular direction relative to a circumferential direction. The bead core (108) is enclosed in a bead structure (111), defined along an inner circumferential edge of the tire (100), with which the tire engages on a rim (not represented in Fig. 1) forming part of a vehicle wheel. The space defined by each carcass turn-up (112) contains a bead filler (107) usually made of a crosslinked elastomeric material and a bead core (108).

An antiabrasive strip (109) is usually placed in an axially outer position relative to the carcass turn-up (112).

A reinforcing layer (110), known as "flipper", is usually wound around the bead core (108) and the bead filler (107) so as to at least partially envelope them.

A belt structure (105) is applied along the circumference of the carcass ply (101). In the particular embodiment of Fig. 1, the belt structure (105) comprises:
- a first belt layer (105a) placed in a radially outer position with respect to said carcass ply (101);
- a second belt layer (105b) placed in a radially outer position with respect to said first belt layer (105a);
- a lateral reinforcing strip (105c) placed in a radially outer position with respect to said second belt layer (105b);
- a third belt layer (105d) placed in a radially outer position with respect to said lateral reinforcing layer (105c);
- an outer belt layer (105e) placed in a radially outer position with respect to said third belt layer (105d).

As reported above, said first belt layer is provided with a plurality of reinforcing elements, typically metal cords, parallel to one another and inclined with respect to the equatorial plane of said tire (100) at an angle not higher than about 60°. Preferably, said first belt layer (105a) is provided with a plurality of reinforcing elements parallel to one another and inclined, preferably in a symmetrical manner, with respect to the equatorial plane of said tire not lower than or equal to about 30°, preferably of from about 45° to about 55°. Preferably, said reinforcing element are inclined in the same direction of those of said second belt layer. Preferably, said reinforcing elements have a density of from about 35 cords/dm to about 60 cords/dm, preferably of from about 40 cords/dm to about 55 cords/dm, measured on said first belt layer (105a), in a circumferential direction, close to the equatorial plane (X-X) of the tire (100).

As reported above, said second belt layer (105b) and said third belt layer (105c) are provided with a plurality of reinforcing elements, typically metal cords, said reinforcing elements being parallel to one another in each layer and intersecting with respect to the adjacent layer, inclined, preferably in a symmetrical manner, with respect to the equatorial plane (X-X) of said tire (100) at an angle of:
- from about 10° to about 40°, preferably of from about 15° to about 30°, in the case of said second belt layer (105b);
- from about 10° to about 40°, preferably of from about 15° to about 25°, in the case of said third belt layer (105c).

Preferably, the reinforcing elements of said second belt layer (105b) and of said third belt layer (105e) have a density of from about 35 cords/dm to about 70 cords/dm, preferably of from about 40 cords/dm to about 60 cords/dm, measured on said second and said third belt layers (105b and 105d, respectively), in a circumferential direction, close to the equatorial plane (X-X) of the tire (100).

In the particular embodiment of Fig. 1, said first belt layer (105a) has its axially outer edge staggered axially inward with respect to the corresponding axially outer edge of said second belt layer (105b). Alternatively, said first belt layer (105a) may have its axially outer edge:
- staggered axially outward with respect to the corresponding axially outer edge of said second belt layer (105b) (not represented in Fig. 1); or
- in correspondence of the axially outer edge of said second belt layer (105b) (not represented in Fig. 1); or
- in correspondence of the axially outer edge of the wider belt layer of said belt structure (105) (not represented in Fig. 1).

Said lateral reinforcing strip (105c) usually incorporates a plurality of reinforcing elements, typically metal cords with a breakage elongation value of from 3% to 10%, preferably of from 3.5% to 7%, said reinforcing elements being oriented in a substantially circumferential direction, thus forming an angle of a few degrees (e.g., an angle of from 0° to 5°) with respect to the equatorial plane (X-X) of the tire (100), and coated with a crosslinked elastomeric material. Preferably, said reinforcing elements have a density of from about 20 cords/dm to 80 cords/dm, preferably of from 30 cords/dm to 60 cords/dm, measured on said second and said lateral reinforcing strip (105c), in a circumferential direction, close to the equatorial plane (X-X) of the tire (100).

In the particular embodiment of Fig. 1, said lateral reinforcing strip (105c) is placed directly in contact with said second belt layer (105d).

In the particular embodiment of Fig. 1, said lateral reinforcing strip (105c) has its axially outer edge staggered axially inward with respect to the corresponding axially outer edge of said second belt layer (105b). Alternatively, said lateral reinforcing strip (105c) may have its axially outer edge:
- in correspondence of the axially outer edge of said second belt layer (105b) (not represented in Fig. 1); or
- in correspondence of the axially outer edge of the wider belt layer of said belt structure (105) (not represented in Fig. 1).

Said lateral reinforcing strip (1 05c) may be obtained by helicoidally winding at least one continuous elongated element comprising one or more reinforcing cord (e.g. a rubbrized strip or a rubberized cord) on said carcass ply (101).

The reinforcing elements of said lateral reinforcing strip (105c) may comprise at least one preformed elementary metal wire. Preferably, said preformed elementary metal wire is preformed in one plane.

Preferably, said elementary metal wire is preformed so that it assumes a wave-shaped configuration so that it is substantially devoid of sharp edges and/or discontinuities in curvature along their longitudinal extension. Said feature is particularly advantageous since the absence of said sharp edges results in a favourable increasing of the breaking load of the elementary metal wire.

Particularly preferred is a preforming according to substantially sinusoidal undulations. Preferably, said sinusoidal undulations have a wavelength of from 2.5 mm to 30 mm, and more preferably of from 5 mm to 25 mm. Preferably, said sinusoidal undulations have a wave amplitude of from 1 mm to 5 mm.

In an alternative embodiment, the elementary metal wire is not preformed in a plane but, for example, is helically preformed.

In order to obtain said preformed elementary metal wire, it is possible to use any one of the methods known in the art. For example, it is possible to use toothed-wheel devices of the type illustrated in United States Patent US 5,581,990, or to use the device described in International Patent Application WO 00/39385.

Alternatively, instead of two lateral reinforcing strips, a reinforcing layer, generally incorporating a plurality of reinforcing elements of the same kind above disclosed, which extends substantially along the whole axial development of said belt structure (105) may be present (not represented in Fig. 1).

As reported above, the outer belt layer (105e) is provided with a plurality of reinforcing elements, typically metal cords, said reinforcing elements being arranged parallel to one another, inclined, preferably in a symmetrical manner, with respect to the equatorial plane (X-X) of the tire (100) at an angle of from 10° to 70°, preferably of from 12° to 40°, and coated with a crosslinked elastomeric material. Preferably, said reinforcing elements have a density of from 30 cords/dm to 75 cords/dm, preferably of from 40 cords/dm to 70 cords/dm, measured on said second and said lateral reinforcing layer (105c), in a circumferential direction, close to the equatorial plane X-X of the tire (100). Preferably, said reinforcing elements may comprise at least one preformed elementary metal wire, said preformed elementary metal wire being above disclosed. Said outer belt layer (105e) acts as a protection layer from stones or gravel possibly entrapped into the tread grooves (106b) and which may cause damages to the belt structure (105) and even to the carcass ply (101).

In the particular embodiment of Fig. 1, said outer belt layer (105e) has its axially outer edge staggered axially inward with respect to the corresponding axially outer edge of said third belt layer (105d). Alternatively, said outer belt layer (105e) may have its axially outer edge:
- in correspondence of the axially outer edge of said third belt layer (105d) (not represented in Fig. 1); or
- in correspondence of the axially outer edge of the wider belt layer of said belt structure (105) (not represented in Fig. 1).

In the particular embodiment of Fig. 1, the axial width of the belt structure (105) corresponds to the axial width (L₅) of the second belt layer (105b), measured between its edges parallel to the axis of rotation of the tire (100). Preferably, the maximum width of the belt structure (105) is equal to 90% of the tire section width.

For the aim of the present description and of the claims which follow, the term "section width" refers to the maximum linear distance parallel to the axis of the tire and between exterior of its sidewalls. Said "section width" may be determined according to ETRTO Standard (2006), pg. 4.

In the particular embodiment of Fig. 1, said first belt layer (1 05a) has an axial width (L₃) which is lower than the axial width (L₅) of the second belt layer (105b), so that its axially outer edge is staggered axially inward by a predetermined distance with respect to the corresponding axially outer edge of said second belt layer (105b). Usually, said predetermined distance is of from about 2 mm to about 50 mm, preferably of from about 10 mm to about 30 mm.

In the particular embodiment of Fig. 1, said lateral reinforcing layer (105c) has its axially outer edge which is staggered axially inward by a predetermined distance with respect to the corresponding axially outer edge of said second belt layer (105b). Usually, said predetermined distance is of from about 2 mm to 60 mm, preferably of from about 5 mm to about 30 mm.

In the particular embodiment of Fig. 1, said third belt layer (105d) has an axial width (L₄) which is lower than the axial width (L₅) of said second belt layer (105b), so that its axially outer edge is staggered axially inward by a predetermined distance with respect to the corresponding axially outer edge of said second belt layer (105b). Usually, said predetermined distance is of from about 0.1 mm to about 50 mm, preferably of from about 5 mm to about 30 mm.

In the particular embodiment of Fig. 1, the outer belt layer (105e) has an axial width (L₁) which is lower than the axial width (L₄) of said third belt layer (105d), so that its axially outer edge is staggered axially inward with respect to the corresponding axially outer edge of said third belt layer (105d). Preferably, said outer belt layer (105e) covers a portion of at least about 10%, preferably of from about 10% to about 100%, more preferably of from about 60% to about 90%, of said lateral reinforcing strip (105c).

In the particular embodiment of Fig. 1, an insert (104) comprising a crosslinked elastomeric material is located at the buttress area, i.e. the area where the lateral edges of the tread band (106) is connected to the sidewall (103). Usually, the insert (104) is interposed between the carcass ply (101), the belt structure (105) and the sidewall (103).

An additional insert (104a) made of a crosslinked elastomeric material is located at the lateral internal edge of each of said lateral reinforcing layer (105e) and interposed between said second belt layer (105b) and said third belt layer (105d).

A tread band (106), whose lateral edges are connected to the sidewall (103), is applied circumferentially in a radially outer position with respect to the belt structure (105). Externally, the tread band (106) has a rolling surface (106a) designed to come into contact with the ground. Circumferential grooves (106b) which are connected by transverse notches (not represented in Fig. 1) so as to define a tread pattern which comprises a plurality of blocks of various shapes and sizes distributed over the rolling surface (106a) are generally made in this surface (106a).

A sidewall (103) is applied externally onto the carcass ply (101), this sidewall extending, in an axially outer position, from the bead (111) to the edge of the tread band (106).

In the case of tubeless tires, a rubber layer (102) generally known as a liner, which provides the necessary impermeability to the inflation air of the tire, may also be provided in an inner position with respect to the said carcass ply (101).

Fig. 2 shows a tire (100) having a structure as described in Fig. 1 wherein a fourth belt layer (105f) is placed between said third belt layer (105d) and said outer belt layer (105e).

In the particular embodiment of Fig. 2, said fourth belt layer (105f) has its axially outer edge staggered axially inward with respect to the corresponding axially outer edge of said third belt layer (105d). Alternatively, said fourth belt layer (105f) may have its axially outer edge:
- in correspondence of the axially outer edge of said third belt layer (105d) (not represented in Fig. 1); or
- in correspondence of the axially outer edge of the wider belt layer of said belt structure (105) (not represented in Fig. 1).

As reported above, said fourth belt layer (105f) is provided with a plurality of reinforcing elements arranged parallel to one another and inclined with respect to the equatorial plane of said tire. Preferably, said reinforcing elements are inclined with respect to the equatorial plane of said tire at an angle of from about 10° to about 40°, preferably of from about 15° to about 25°. Preferably, said reinforcing elements are inclined in the same direction of those of said third belt layer.

In the particular embodiment of Fig. 1, said fourth belt layer (105f) has an axial width (L₆) which is lower than the axial width (L₃) of said third belt layer (105d), so that its axially outer edge is staggered axially inward by a predetermined distance with respect to the corresponding axially outer edge of said third belt layer (105d). Usually, said predetermined distance is of from about 0.1 mm to about 50 mm, preferably of from about 5 mm to about 30 mm.

The process for producing the tire according to the present invention may be carried out according to techniques and using apparatus known in the art, said process including manufacturing the green tire, and subsequently moulding and vulcanizing the green tire.

The present invention will be further illustrated below by means of an illustrative embodiment which is given for purely indicative purposes and without any limitation of this invention.

### Example 1

Four tires having size 315/60R22.5, were manufactured according to the embodiment of Fig. 1.

The tires were subjected to both indoor and outdoor testing.

### Indoor testing

The above mentioned tires were subjected to a high speed durability test on a laboratory machine (indoor test). To this end, each tire, at an inflation pressure of 5 bar, subjected to a load of 2600 Kg, was rotated on a drum at increasing speed until the tire failed. Each tire tire did not fail for an overall duration of the test of 50 hours reaching a maximun speed of 110 km/h.

### Outdoor testing

The abovementioned tires were subjected to the following test. The test was conducted at a speed of 80 km/h, on straight roads having different surfaces (e.g., flat and regular surface and undulated surface). For instance, the driver evaluated the steering corrections (if any) necessary to keep a straight path, the capacity of the tire to overcome any upward projecting bumps of the road, the rigidity of the steering-wheel, the lateral stability, the comfort.

The tires where mounted in a vehicle Scania 144/530. The tire were fitted on standard rims and were inflated at the nominal operating pressure (i.e. 8 bar).

The test driver judged the tire behaviour and assigned a score depending on the tire performances during the above test. Table 1 sums up the test driver's score sheet for the tire controllability. The results of said tests are expressed by means of an evaluation scale representing the subjective opinion expressed by the test driver through a point system. The values reproduced in the following Table 1 represent a mean value between those obtained in several test sessions (5 - 6 tests, for example) and given by several tests drivers. It should be noted that the scale of values run from a minimum of 4 to a maximum of 9.

**TABLE 1**

| | Straight running | Lateral stability | Comfort |
|---|---|---|---|
| Tire | 7.5 | 8.0 | 7.0 |

Table 1 clearly shows that the tire according to the present invention has good performances, in particular in terms of straight running, lateral stability and comfort.

## Claims

1. Tire comprising:
- a carcass structure comprising at least one carcass ply (101), of a substantially toroidal shape, having opposite lateral edges associated with respective right-hand and left-hand bead structures (111);
- a belt structure (105) applied in a radially outer position with respect to said carcass structure;
- a tread band (106) applied in a radially outer position with respect to said belt structure (105);
- two sidewalls (103), each sidewall being applied laterally on opposite sides with respect to said carcass structure;
said belt structure (105) comprising:
- a first belt layer (105a) applied in a radially outer position with respect to said carcass structure, said first belt layer (105a) being provided with a plurality of reinforcing elements parallel to one another and inclined with respect to the equatorial plane (X-X) of said tire (100) at an angle lower than 60°;
- a second belt layer (105b) applied in a radially outer position with respect to said first belt layer (105a), said second belt layer being provided with a plurality of reinforcing elements parallel to one another and inclined with respect to the equatorial plane (X-X) of said tire;
- at least one reinforcing layer, said reinforcing layers being provided with a plurality of reinforcing elements oriented in a substantially circumferential direction, said reinforcing layer being placed in a radially outer position with respect to said second belt layer (1 05b);
- a third belt layer (105d) applied in a radially outer position with respect to said at least one reinforcing layer, said third belt layer (105d) being provided with a plurality of reinforcing elements parallel to one another and inclined with respect to the equatorial plane (X-X) of said tire (100) in a direction opposite to those of said second belt layer (105b);
**characterized in that**
- said at least one reinforcing layer comprises at least one pair of lateral reinforcing strips (105c), said pair of lateral reinforcing strips being substantially symmetrically arranged with respect to the equatorial plane (X-X) of the tire (100) and applied in correspondence of the axially outer portions of the tire belt structure (105);
- said at least one reinforcing layer is placed directly in contact with said second belt layer (105b);
- said at least one reinforcing layer has its axially outer edges staggered axially inward with respect to the corresponding axially outer edges of said second belt layer (105b);
- said third belt layer (105d) is placed directly in contact with said at least one reinforcing layer.

2. Tire according to claim 1, wherein said first belt layer (105a) is provided with a plurality of reinforcing elements parallel to one another and inclined with respect to the equatorial plane of said tire at an angle not lower than or equal to about 30°.

3. Tire according to claim 2, wherein said first belt layer (105a) is provided with a plurality of reinforcing elements parallel to one another and inclined with respect to the equatorial plane of said tire at an angle of from about 45° to about 55°.

4. Tire according to any one of claims 1 to 3 wherein at least one belt underlayer is placed between said first belt structure and said carcass structure.

5. Tire according to any one of the preceding claims, wherein said second belt layer (105b) is placed directly in contact with said first belt layer (105a).

6. Tire according to any one of the preceding claims, wherein said second belt layer (105b) has its axially outer edges staggered axially outward with respect to the corresponding axially outer edges of said first belt layer or in correspondence of the axially outer edges of said first belt layer (1 05a).

7. Tire according to any one of the preceding claims, wherein said second belt layer (105b) is provided with a plurality of reinforcing elements parallel to one another and inclined with respect to the equatorial plane of said tire at an angle of from about 10° to about 40°.

8. Tire according to claim 7, wherein said second belt layer (105b) is provided with a plurality of reinforcing elements parallel to one another and inclined with respect to the equatorial plane of said tire at an angle of from about 15° to about 30°.

9. Tire according to claim 1 wherein each of said pair of lateral reinforcing strips (105c) has an axial width lower than or equal to about 45% with respect to the axial width of the belt structure (105), said axial width corresponding to the axial width of the wider belt layer.

10. Tire according to claim 9 wherein each of said pair of lateral reinforcing strips (105c) has an axial width of from about 5% to about 40% with respect to the axial width of the belt structure (105), said axial width corresponding to the axial width of the wider belt layer.

11. Tire according to any one of the preceding claims, wherein said third belt layer (105a) has its axially outer edges staggered axially inward with respect to the corresponding axially outer edges of said second belt layer (105b).

12. Tire according to any one of the preceding claims, wherein said third belt layer (105d) is provided with a plurality of reinforcing elements parallel to one another and inclined with respect to the equatorial plane (X-X) of said tire at an angle of from about 10° to about 40°.

13. Tire according to claim 12, wherein said third belt layer (105d) is provided with a plurality of reinforcing elements parallel to one another and inclined with respect to the equatorial plane (X-X) of said tire at an angle of from about 15° to about 25°.

14. Tire according to any one of the preceding claims, wherein said belt structure (105) further comprises an outer belt layer (105e) applied in a radially outer position with respect to said second and said third belt layers (105b, 105d), said outer belt layer (105e) being provided with reinforcing elements parallel to one another.

15. Tire according to claim 14, wherein said outer belt layer (105e) has its axially outer edges staggered axially inward with respect to the corresponding axially outer edges of said third belt layer (105d).

16. Tire according to claim 14, wherein said outer belt layer (105e) has its axially outer edges staggered axially inward with respect to the corresponding axially outer edges of said at least one reinforcing layer or in correspondence of the axially outer edges of said at least one reinforcing layer.

17. Tire according to claim 14, wherein said reinforcing elements are inclined with respect to the equatorial plane (X-X) of said tire at an angle of from about 10° to about 40°.

18. Tire according to claim 17, wherein said reinforcing elements are inclined with respect to the equatorial plane (X-X) of said tire at an angle of from about 15° to about 25°.

19. Tire according to any one of the preceding claims, wherein said belt structure (105) further comprises a fourth belt layer (105f) applied between said third belt (105d) layer and said outer belt layer (105e), said fourth belt layer (105f) being provided with a plurality of reinforcing elements arranged parallel to one another and inclined with respect to the equatorial plane (X-X) of said tire.

20. Tire according to claim 19, wherein said reinforcing elements are inclined with respect to the equatorial plane (X-X) of said tire at an angle of from about 10° to about 40°.

21. Tire according to claim 20, wherein said reinforcing elements are inclined with respect to the equatorial plane (X-X) of said tire at an angle of from about 15° to about 25°.

22. Tire according to any one of claims 19 to 21, wherein said reinforcing elements are inclined in the same direction of those of said third belt layer (105d).

23. Tire according to any one of claims 19 to 22, wherein said fourth belt layer (105f) is placed directly in contact with said third belt layer (105d).

24. Tire according to any one of claims 19 to 23, wherein said fourth belt layer (105f) has its axially outer edges staggered axially inward with respect to the corresponding axially outer edges of said third belt layer (105d) or in correspondence of the axially outer edges of said third belt layer (105d).

25. Tire according to any one of the preceding claims, which is a heavy load vehicle tire.

## Patentansprüche

1. Reifen, mit:
einer Karkassenstruktur mit mindestens einer Karkassenlage (101), die eine im Wesentlichen ringförmige Form aufweist, und gegenüberliegende Seitenkanten, welche sich auf entsprechende rechtshändige und linkshändige Wulststrukturen (111) beziehen, aufweist;
einer Gürtelstruktur (105), die bezüglich der Karkassenstruktur in einer radial äußeren Position angebracht ist;
einem Laufflächenband (106), welches in Bezug auf die Gürtelstruktur (105) an einer radial äußeren Position angebracht ist;
zwei Seitenwänden (103), wobei jede Seitenwand in Bezug auf die Karkassenstruktur seitlich an sich gegenüberliegenden Seiten angebracht ist, und
die Gürtelstruktur (105) aufweist:
eine erste Gürtelschicht (105a), die in Bezug auf die Karkassenstruktur an einer radial äußeren Position angebracht ist, wobei an der ersten Gürtelschicht (105a) eine Vielzahl von Verstärkungselementen vorgesehen sind, die parallel zueinander angeordnet sind und in Bezug auf die Äquatorialebene (X-X) des Reifens (100) mit einem Winkel, der kleiner als 60° ist, geneigt sind;
eine zweite Gürtelschicht (105b), die in Bezug auf die erste Gürtelschicht (105a) an einer radial äußeren Position angebracht ist, wobei an der zweiten Gürtelschicht eine Vielzahl von Verstärkungselementen vorgesehen sind, die parallel zueinander angeordnet sind und in Bezug auf die Äquatorialebene (X-X) des Reifens geneigt sind;
mindestens einer Verstärkungsschicht, wobei an den Verstärkungsschichten eine Vielzahl von Verstärkungselementen vorgesehen sind, die im Wesentlichen in einer Umfangsrichtung ausgerichtet sind, und die verstärkten Schichten in Bezug auf die zweite Gürtelschicht (105b) an einer radial äußeren Position angeordnet sind;
einer dritten Gürtelschicht (105d), die in Bezug auf die mindestens eine Verstärkungsschicht an einer radial äußeren Position angebracht ist, wobei an der dritten Gürtelschicht (105d) eine Vielzahl von Verstärkungselementen vorgesehen sind, die parallel zueinander angeordnet sind und in Bezug auf die Äquatorialebene (X-X) des Reifens (100) in einer Richtung, die der zweiten Gürtelschicht (105b) gegenüberliegt, geneigt sind;
**dadurch gekennzeichnet, dass**
die mindestens eine Verstärkungsschicht mindestens ein Paar von seitlichen Verstärkungsstreifen (105c) aufweist, wobei das Paar von seitlichen Verstärkungsstreifen in Bezug auf die Äquatorialebene (X-X) des Reifens (100) im Wesentlichen symmetrisch angeordnet ist, und in Übereinstimmung mit den axialen äußeren Bereichen der Reifengürtelstruktur (105) angebracht ist;
die mindestens eine Verstärkungsschicht in direktem Kontakt mit der zweiten Gürtelschicht (105b) positioniert ist;
die mindestens eine Verstärkungsschicht ihre axialen äußeren Kanten in Bezug auf die entsprechenden axialen äußeren Kanten der zweiten Gürtelschicht (105b) axial nach innen versetzt hat;
die dritte Gürtelschicht (105d) in direktem Kontakt mit der mindestens einen Verstärkungsschicht positioniert ist.

2. Reifen nach Anspruch 1, bei dem an der ersten Gürtelschicht (105a) eine Vielzahl von Verstärkungselementen vorgesehen sind, die parallel zueinander angeordnet sind und in Bezug auf die Äquatorialebene des Reifens um einen Winkel geneigt sind, der nicht kleiner oder gleich etwa 30° ist.

3. Reifen nach Anspruch 2, bei dem an der ersten Gürtelschicht (105a) eine Vielzahl von Verstärkungselementen vorgesehen sind, die parallel zueinander angeordnet sind und in Bezug auf die Äquatorialebene des Reifens um einem Winkel von etwa 45° bis etwa 55° geneigt sind.

4. Reifen nach einem der Ansprüche 1 bis 3, bei dem mindestens eine Gürtelunterschicht zwischen der ersten Gürtelstruktur und der Karkassenstruktur angeordnet ist.

5. Reifen nach einem der vorhergehenden Ansprüche, bei dem die zweite Gürtelschicht (105b) in direktem Kontakt mit der ersten Gürtelschicht (105a) angeordnet ist.

6. Reifen nach einem der vorhergehenden Ansprüche, bei dem die zweite Gürtelschicht (105b) ihre axialen äußeren Kanten in Bezug auf die entsprechenden axialen äußeren Kanten der ersten Gürtelschicht axial nach außen versetzt oder in Übereinstimmung mit den axialen äußeren Kanten der ersten Gürtelstruktur (105a) hat.

7. Reifen nach einem der vorhergehenden Ansprüche, bei dem an der zweiten Gürtelschicht (105b) eine Vielzahl von Verstärkungselementen vorgesehen sind, die parallel zueinander angeordnet sind und in Bezug auf die Äquatorialebene des Reifens um einen Winkel zwischen etwa 10° und etwa 40° geneigt sind.

8. Reifen nach Anspruch 7, bei dem an der zweiten Gürtelschicht (105b) eine Vielzahl von Verstärkungselementen vorgesehen sind, die parallel zueinander angeordnet sind und in Bezug auf die Äquatorialebene des Reifens um einen Winkel zwischen etwa 15° und etwa 30° geneigt sind.

9. Reifen nach Anspruch 1, bei dem jedes Paar von seitlichen Verstärkungsstreifen (105b) eine axiale Breite aufweist, die geringer oder gleich etwa 45% der axialen Breite der Gürtelstruktur (105) ist, wobei diese axiale Breite der axialen Breite der breiteren Gürtelschicht entspricht.

10. Reifen nach Anspruch 9, bei dem jedes der Paare von seitlichen Verstärkungsstreifen (105c) eine axiale Breite von etwa 5% bis etwa 40% der axialen Breite der Gürtelstruktur (105) aufweist, wobei diese axiale Breite der axialen Breite der breiteren Gürtelschicht entspricht.

11. Reifen nach einem der vorhergehenden Ansprüche, bei dem die dritte Gürtelschicht (105d) ihre axialen äußeren Kanten in Bezug auf die entsprechenden axialen äußeren Kanten der zweiten Gürtelschicht (105b) axial nach innen versetzt hat.

12. Reifen nach einem der vorhergehenden Ansprüche, bei dem an der dritten Gürtelschicht (105d) eine Vielzahl von Verstärkungselementen vorgesehen sind, die parallel zueinander angeordnet sind und in Bezug auf die Äquatorialebene (X-X) des Reifens um einen Winkel zwischen etwa 10° bis etwa 40° geneigt sind.

13. Reifen nach Anspruch 12, bei dem an der dritten Gürtelschicht (105d) eine Vielzahl von Verstärkungselementen vorgesehen sind, die parallel zueinander angeordnet sind und in Bezug auf die Äquatorialebene (X-X) des Reifens um einen Winkel zwischen etwa 15° bis etwa 25° geneigt sind.

14. Reifen nach einem der vorhergehenden Ansprüche, bei dem die Gürtelstruktur (105) ferner eine äußere Gürtelschicht (105e) aufweist, die in Bezug auf die zweite und dritte Gürtelschichten (105b, 105d) an einer radial äußeren Position angeordnet ist, wobei die äußere Gürtelschicht (105e) mit Verstärkungselementen, die parallel zueinander angeordnet sind, versehen ist.

15. Reifen nach Anspruch 14, bei dem die äußere Gürtelschicht (105e) ihre axialen äußeren Kanten in Bezug auf die entsprechenden axialen äußeren Kanten der dritten Gürtelschicht (105d) axial nach innen versetzt hat.

16. Reifen nach Anspruch 14, bei dem die äußere Gürtelschicht (105e) ihre axialen äußeren Kanten in Bezug auf die entsprechenden axialen äußeren Kanten der mindestens einen Verstärkungsschicht axial nach innen versetzt oder in Übereinstimmung mit den axialen äußeren Kanten der mindestens einen Verstärkungsschicht hat.

17. Reifen nach Anspruch 14, bei dem die Verstärkungselemente in Bezug auf die Äquatorialebene (X-X) des Reifens um einen Winkel zwischen etwa 10° bis etwa 40° geneigt sind.

18. Reifen nach Anspruch 17, bei dem die Verstärkungselemente in Bezug auf die Äquatorialebene (X-X) des Reifens um einen Winkel von etwa 15° bis etwa 25° geneigt sind.

19. Reifen nach einem der vorhergehenden Ansprüche, bei dem die Gürtelstruktur (105) ferner eine vierte Gürtelschicht (105f) umfasst, die zwischen der dritten Gürtelschicht (105d) und der äußeren Gürtelschicht (105e) angebracht ist, wobei an der vierten Gürtelschicht (105f) eine Vielzahl von Verstärkungselementen vorgesehen sind, die parallel zueinander angeordnet und in Bezug auf die Äquatorialebene (X-X) des Reifens geneigt sind.

20. Reifen nach Anspruch 19, bei dem die Verstärkungselemente in Bezug auf die Äquatorialebene (X-X) des Reifens um einen Winkel zwischen etwa 10° bis etwa 40° geneigt sind.

21. Reifen nach Anspruch 20, bei dem die Verstärkungselemente in Bezug auf die Äquatorialebene (X-X) des Reifens um einen Winkel zwischen etwa 15° bis etwa 25° geneigt sind.

22. Reifen nach einem der Ansprüche 19 bis 21, bei dem die Verstärkungselemente in die gleiche Richtung wie die der dritten Gürtelschicht (105d) geneigt sind.

23. Reifen nach einem der Ansprüche 19 bis 22, bei dem die vierte Gürtelschicht (105f) in direktem Kontakt mit der dritten Gürtelschicht (105d) angeordnet ist.

24. Reifen nach einem der Ansprüche 19 bis 23, bei dem die vierte Gürtelschicht (105f) ihre axialen äußeren Kanten in Bezug auf die entsprechenden axialen äußeren Kanten der dritten Gürtelschicht (105d) axial nach innen versetzt oder in Übereinstimmung mit den axialen äußeren Kanten der dritten Gürtelschicht (105d) hat.

25. Reifen nach einem der vorhergehenden Ansprüche, bei dem der Reifen ein Schwerlastfahrzeugreifen ist.

## Revendications

1. Pneu comprenant :
- une structure de carcasse comprenant au moins une nappe de carcasse (101), d'une forme sensiblement toroïdale, ayant des bords latéraux opposés associés à des structures de talon respectives droite et gauche (111) ;
- une structure de ceinture (105) appliquée dans une position radialement extérieure par rapport à ladite structure de carcasse ;
- une bande de roulement (106) appliquée dans une position radialement extérieure par rapport à ladite structure de ceinture (105);
- deux flancs (103), chaque flanc étant appliqué latéralement sur des côtés opposés par rapport à ladite structure de carcasse ;
ladite structure de ceinture (105) comprenant :
- une première couche de ceinture (105a) appliquée dans une position radialement extérieure par rapport à ladite structure de carcasse, ladite première couche de ceinture (105a) étant pourvue de plusieurs éléments de renforcement parallèles entre eux et inclinés par rapport au plan équatorial (X-X) dudit pneu (100), d'un angle inférieur à 60° ;
- une seconde couche de ceinture (105b) appliquée dans une position radialement extérieure par rapport à ladite première couche de ceinture (105a), ladite seconde couche de ceinture étant pourvue de plusieurs éléments de renforcement parallèles entre eux et inclinés par rapport au plan équatorial (X-X) dudit pneu ;
- au moins une couche de renforcement, lesdites couches de renforcement étant pourvues de plusieurs éléments de renforcement orientés dans une direction sensiblement circonférentielle, lesdites couches de renforcement étant placées dans une position radialement extérieure par rapport à ladite seconde couche de ceinture (105b) ;
- une troisième couche de ceinture (105d) appliquée dans une position radialement extérieure par rapport à ladite au moins une couche de renforcement, ladite troisième couche de ceinture (105d) étant pourvue de plusieurs éléments de renforcement parallèles entre eux et inclinés par rapport au plan équatorial (X-X) dudit pneu (100) dans une direction opposée à ceux de ladite seconde couche de ceinture (105b) ;
**caractérisé en ce que**
- ladite au moins une couche de renforcement comprend au moins une paire de bandes de renforcement latéral (105c), ladite paire de bande de renforcement latéral étant agencée sensiblement symétriquement par rapport au plan équatorial (X-X) du pneu (100) et appliquée en correspondance des parties axialement extérieures de la structure de ceinture (105) du pneu ;
- ladite au moins une couche de renforcement est placée directement en contact avec ladite seconde couche de ceinture (105b) ;
- ladite au moins une couche de renforcement a ses bords axialement extérieurs décalés axialement vers l'intérieur par rapport aux bords correspondants axialement extérieurs de ladite seconde couche de ceinture (105b) ;
- ladite troisième couche de ceinture (105d) est placée directement en contact avec ladite au moins une couche de renforcement.

2. Pneu selon la revendication 1, dans lequel ladite première couche de ceinture (105a) est pourvue de plusieurs éléments de renforcement parallèles entre eux et inclinés par rapport au plan équatorial dudit pneu d'un angle non inférieur ou égal à environ 30°.

3. Pneu selon la revendication 2, dans lequel ladite première couche de ceinture (105a) est pourvue de plusieurs éléments de renforcement parallèles entre eux et inclinés par rapport au plan équatorial dudit pneu d'un angle compris entre environ 45° et environ 55°.

4. Pneu selon l'une quelconque des revendications 1 à 3, dans lequel au moins une sous couche de ceinture est placée entre ladite première structure de ceinture et ladite structure de carcasse.

5. Pneu selon l'une quelconque des revendications précédentes, dans lequel ladite seconde couche de ceinture (105b) est placée directement en contact avec ladite première couche de ceinture (105a).

6. Pneu selon l'une quelconque des revendications précédentes, dans lequel ladite seconde couche de ceinture (105b) a ses bords axialement extérieurs décalés axialement vers l'extérieur par rapport aux bords axialement extérieurs correspondants de ladite première couche de ceinture ou en correspondance avec les bords axialement extérieurs de ladite première couche de ceinture (105a).

7. Pneu selon l'une quelconque des revendications précédentes, dans lequel ladite seconde couche de ceinture (105b) est pourvue de plusieurs éléments de renforcement parallèles entre eux et inclinés par rapport au plan équatorial dudit pneu d'un angle compris entre environ 10° et environ 40°.

8. Pneu selon la revendication 7, dans lequel ladite seconde couche de ceinture (105b) est pourvue de plusieurs éléments de renforcement parallèles entre eux et inclinés par rapport au plan équatorial dudit pneu d'un angle compris entre environ 15° et environ 30°.

9. Pneu selon la revendication 1, dans lequel chacune des bandes de renforcement latéral (105c) de ladite paire a une largeur axiale inférieure ou égale à environ 45% de la largeur axiale de la structure de ceinture (105), ladite largeur axiale correspondant à la largeur axiale de la couche de ceinture la plus large.

10. Pneu selon la revendication 9, dans lequel chacune des bandes de renforcement latéral (105c) de ladite paire a une largeur axiale comprise entre environ 5% et environ 40% de la largeur axiale de la structure de ceinture (105), ladite largeur axiale correspondant à la largeur axiale de la couche de ceinture la plus large.

11. Pneu selon l'une quelconque des revendications précédentes, dans lequel ladite troisième couche de ceinture (105a) a ses bords axialement extérieurs décalés axialement vers l'intérieur par rapport aux bords correspondant axialement extérieurs de ladite seconde couche de ceinture (105b).

12. Pneu selon l'une quelconque des revendications précédentes, dans lequel ladite troisième couche de ceinture (105d) est pourvue de plusieurs éléments de renforcement parallèles entre eux et inclinés par rapport au plan équatorial (X-X) dudit pneu d'un angle compris entre environ 10° et environ 40°.

13. Pneu selon la revendication 12, dans lequel ladite troisième couche de ceinture (105d) est pourvue de plusieurs éléments de renforcement parallèles entre eux et inclinés par rapport au plan équatorial (X-X) dudit pneu d'un angle compris entre environ 15° et environ 25°.

14. Pneu selon l'une quelconque des revendications précédentes, dans lequel ladite structure de ceinture (105) comprend en outre une couche de ceinture extérieure (105e) appliquée dans une position radialement extérieure par rapport auxdites seconde et troisième couches de ceinture (105b, 105d), ladite couche de ceinture extérieure (105e) étant pourvue d'éléments de renforcement parallèles entre eux.

15. Pneu selon la revendication 14, dans lequel ladite couche de ceinture extérieure (105e) a ses bords axialement extérieurs décalés vers l'intérieur axialement par rapport aux bords axialement extérieurs correspondants de ladite troisième couche de ceinture (105d).

16. Pneu selon la revendication 14, dans lequel ladite couche de ceinture extérieure (105e) a ses bords axialement extérieurs décalés vers l'intérieur axialement par rapport aux bords axialement extérieurs correspondants de ladite au moins une couche de renforcement ou en correspondance avec les bords axialement extérieurs de ladite au moins une couche de renforcement.

17. Pneu selon la revendication 14, dans lequel lesdits éléments de renforcement sont inclinés par rapport au plan équatorial (X-X) dudit pneu d'un angle compris entre environ 10° et environ 40°.

18. Pneu selon la revendication 17, dans lequel lesdits éléments de renforcement sont inclinés par rapport au plan équatorial (X-X) dudit pneu d'un angle compris entre environ 15° et environ 25°.

19. Pneu selon l'une quelconque des revendications précédentes, dans lequel ladite structure de ceinture (105) comprend en outre une quatrième couche de ceinture (105f) appliquée entre ladite troisième couche de ceinture (105d) et ladite couche de ceinture extérieure (105e), ladite quatrième couche de ceinture (105f) étant pourvue de plusieurs éléments de renforcement agencés parallèles entre eux et inclinés par rapport au plan équatorial (X-X) dudit pneu.

20. Pneu selon la revendication 19, dans lequel lesdits éléments de renforcement sont inclinés par rapport au plan équatorial (X-X) dudit pneu d'un angle compris entre environ 10° et environ 40°.

21. Pneu selon la revendication 20, dans lequel lesdits éléments de renforcement sont inclinés par rapport au plan équatorial (X-X) dudit pneu d'un angle compris entre environ 15° et environ 25°.

22. Pneu selon l'une quelconque des revendications 19 à 21, dans lequel lesdits éléments de renforcement sont inclinés dans la même direction que ceux de ladite troisième couche de ceinture (105d).

23. Pneu selon l'une quelconque des revendications 19 à 22, dans lequel ladite quatrième couche de ceinture (105f) est placée directement en contact avec ladite troisième couche de ceinture (105d).

24. Pneu selon l'une quelconque des revendications 19 à 23, dans lequel ladite quatrième couche de ceinture (105f) a ses bords axialement extérieurs décalés axialement vers l'intérieur par rapport aux bords axialement extérieurs correspondants de ladite troisième couche de ceinture (105d) ou en correspondance avec les bords axialement extérieurs de ladite troisième couche de ceinture (105d).

25. Pneu selon l'une quelconque des revendications précédentes, qui est un pneu pour véhicule poids lourds.
